# EUROPÄISCHE PATENTSCHRIFT

(11) **EP 0 644 681 B1**
(45) Veröffentlichungstag und Bekanntmachung des Hinweises auf die Patenterteilung: **28.11.2001**
(21) Anmeldenummer: 94111981.0
(22) Anmeldetag: 01.08.1994
(51) Int. Cl.: H04M 11/00, G06K 19/07

(54) **Karte mit Sperrung bei Fernabfrage**
Card with lock by remote interrogation
Carte avec verrouillage dans le cas d'une interrogation à distance

(30) Priorität: 15.08.1993 DE 4327334
(43) Veröffentlichungstag der Anmeldung: 22.03.1995
(73) Patentinhaber: Angewandte Digital Elektronik GmbH, 21521 Dassendorf (DE)
(72) Erfinder: Kreft, Hans-Diedrich, D-21521 Dassendorf (DE); Iloff, Michael, D-70195 Stuttgart (DE); Mackenthun, Holger, D-22393 Hamburg (DE)
(74) Vertreter: Mierswa, Klaus, Dipl.-Ing.

(56) Entgegenhaltungen:
- EP-A- 0 334 804
- EP-A- 0 466 949
- EP-A- 0 576 918
- DE-C- 3 447 560
- GB-A- 2 237 479

## Beschreibung

Die Erfindung betrifft einen mikroelektronischen Daten- und/oder Funktionsträger zur berührungslosen Daten- und Energieübertragung umfassend mindestens zwei räumlich voneinander getrennte Empfangselemente für Wechselfelder; mindestens eine Elektronik zur Aufbereitung der Wechselfeldkomponenten an den Empfangselementen als Signale derart, dass eine Phasenverschiebung zwischen den Wechselfeldkomponenten an den Empfangselementen eindeutig in eine Phasenverschiebung zwischen den Signalen abgebildet wird sowie eine Vorrichtung zur berührungslosen Daten- und Energieübertragung gemäß dem Oberbegriff des Anspruchs 1 sowie des Anspruchs 2.

### Problembeschreibung:

Am Markt werden vermehrt Plastikkarten eingesetzt, die einen Chip enthalten (Chipkarte, Smart Card, intelligente Chipkarte ...). Die Chips funktionieren als Datenspeicher, Mikroprozessoren, Ein/Ausgabe-Bausteine und vieles mehr. Sie dienen Zwecken wie Telefonieren, Parken, Kantinen-Essen bezahlen, Guthaben transportieren, Zugang kontrollieren, Zeiterfassung usw. Diese Karten erlauben in ihren vielfältigen Ausführungen und insbesondere als Multiapplikationskarten (diese erledigen mehrere Zwecke gemeinsam auf einer einzigen Karte) die Speicherung von persönlichen Daten. Die Daten auf einer Karte lassen einen Ruckschluß auf den Inhaber der Karte und sein Verhalten zu.

Chipkarten gibt es vorwiegend in den zwei technischen Ausführungen kontaktbehaftete Karten (Kontaktkarten, galvanische Karten) und kontaktlose (nichtgalvanische) Karten. Kontaktbehaftete Karten benötigen auf ihrer Oberfläche galvanische Kontakte zur einwandfreien Funktion. Kontaktlose Karten verzichten auf diese Kontakte und enthalten Übertrager-Spulen oder Kondensatorplatten oder optische Elemente zur Übertragung von Energie und/oder Daten. Die zum Betrieb der Karte erforderliche Energie kann auch aus einer - insbesondere in der Karte befindlichen - Batterie gewonnen werden.

Kontaktlose Chipkarten gibt es in zwei Ausführungen, für deren beide die internationale Normung im Gang ist. Diese Normung gebraucht zur Abgrenzung der betroffenen Kartentypen englische Begriffe, die auch hier genannt sein sollen. Kontaktlose Chipkarten (close-coupled cards, z.B. C2® -CARD s) gemaS ISO 10536 sollen nur über kleine Distanzen nutzbar sein. Im Gegensatz hierzu arbeiten andere Karten (remote-coupled cards), die auch über größere Distanzen benutzt werden können. Die Normung dieser remote-coupled cards befindet sich noch in den Anfängen. Die Abgrenzung der kontaktlosen Karten untereinander erlangt zunehmend an Bedeutung, weil der unbemerkte Zugriff auf die Karte problematisch ist. Tabelle 1 gibt einen groben Überblick über die Verhältnisse bezüglich der Nutzbarkeit der verschiedenen Karten bei unterschiedlichen Distanzen:

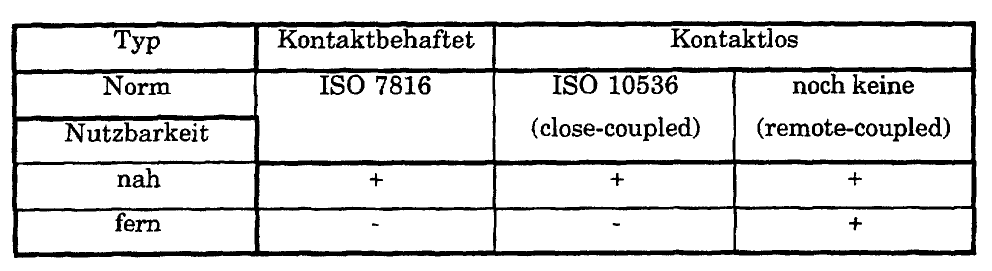

Bei der galvanisch kontaktierten Karte ist es ausgeschlossen - mindestens aber unvorstellbar - daß eine Einrichtung beliebiger Art sich unbemerkt Zugang zu dem Inhalt dieser Karte verschafft, solange der Besitzer diese Karte unter seiner Aufsicht hat. Ganz anders sind die Verhältnisse bei jenen Karten, deren Inhalt ohne galvanische Verbindung zwischen Karte und Endgerät erreicht werden kann - nämlich bestimmungsgemäß drahtlos (kontaktlos) - insbesondere auf dem Weg über elektrische oder magnetische Kopplung oder elektromagnetische Strahlung - insbedondere Licht oder Mikrowellen - oder akustische Übertragung oder Kombinationen der genannten Prinzipien: Hier kann der Zugang des Endgerätes zum Inhalt der Karte der Aufsicht des Besitzers der Karte entzogen sein. Das Endgerät hat prinzipiell unbemerkt Zugang zum Inhalt der Karte.

Weil auf die Daten in der remote-coupled Karte sowohl in einem Endgerät (Terminal) als auch aus größerer Enffernung außerhalb des Terminals zugegriffen werden kann, funktioniert eine Abgrenzung zwischen closec-oupled einerseits und remote-coupled Chipkarten andererseits nur dann'sauber, wenn die close-coupled Karten den Zugriff aus der Enffernung zwangsläufig ausschließen.

Kontaktlose Karten enthalten ihren Chip in nicht manipulierbarer Weise im Trägermaterial eingebettet und haben eine längere Lebensdauer als galvanisch kontaktierte Karten. Bestimmte Ausführungsformen bieten den ergonomischen Vorteil, daß sie ohne Rücksicht auf die geometrische Orientierung in ihren vier verschiedenen Betriebslagen entlang ihrer Längsachse in das Terminal eingeführt werden können. Es ist abzusehen, daß neben der galvanischen Chipkarte die kontaktlose Chipkarte Verbreitung so finden wird und dem Nutzer der kontaktlosen Karte daraus Vorteile erwachsen.

Dem Nachteil des unbemerkbaren Zugriffs auf Daten kontaktloser Karten begegnen Anbieter mit der Argumentation, ihre Karten ließen nur in einem begrenzten kleinen Abstand "Fernübertragung" zu: die Reichweite sei in der gewünschten Weise begrenzt. Dieser Argumentation steht entgegen, daß nach ausreichender Erhöhung der Intensität des vom Sender abgegebenen Informationsträgers die Reichweite innerhalb der technisch möglichen Grenzen beliebig ausgedehnt werden kann. Die Grenzen zwischen Nahbetrieb und Fernbetrieb verschwimmen. Die illegale Manipulation auf der Karte durch Manipulation am Sender kann nicht beweisbar ausgeschlossen werden. Die Reichweite des Datenverkehrs ist lediglich durch die Intensität des übertragenden Mediums begrenzt und kann im Rahmen des technisch Machbaren beliebig groß gemacht werden.

Nicht zufriedenstellend ist auch die Argumentation, die Verschlüsselung des Datenverkehrs zwischen der Karte und einem bestimmten Terminal schütze vor dem unbemerkbaren Zugriff auf die Daten in der Karte. Dieser Argumentation steht entgegen, daß nicht nur ein entwendetes oder nachgebautes Terminal ebenfalls seine Funktion erfüllt, sondern hinwiederum die vorgenannte Intensitätserhöhung anwendbar ist. Damit kann der verschlüsselte Datenverkehr auch aus der Ferne stattfinden und die Verschlüsselung wird als Schutzmechanismus wertlos.

Beispielhaft wird nun auf die Problemstellung eingegangen, daß insbesondere Anbieter von Produkten oder Dienstleistungen - vor allem Banken - auf Karten der hier betrachteten Art insbesondere Guthaben oder Kreditlinien unterbringen. Solche Unternehmen können nur dann Verantwortung für den bestimmungsgemäßen Zustand des Karteninhalts übernehmen, wenn die Karte zur Bearbeitung zwangsläufig physikalisch in ein Terminal befördert werden muß, von dem sie notfalls auch einbehalten werden kann, sobald bei der Bearbeitung ein Fehler festgestellt wird. Es so ist nicht zu erwarten, daß solche Körperschaften ein Prinzip zum kaufmönnischen Einsatz zulassen werden, daß nicht eine solche Mindestanforderung unwiderruflich und unmanipulierbar unter Beweis stellen kann.

Ist für Karten eine Problemlösung gefunden, die nur innerhalb einer von der Karte vorbestimmten Reichweite bestimmte Funktionen ausführt, kann diese Lösung auch auf andere Problemfälle der berührungslosen Datenübertragung - wie insbesondere das Parametrisieren und Abfragen sowie Senden von Daten zu/von kontaktlosen Herzschrittmachern - angewendet werden.

Es sind zwei Möglichkeiten bekannt, den Besitzer einer kontaktlosen Karte vor unbemerktem Zugriff auf seine Kartendaten zu schützen:
- Der Inhaber der Karte ist gezwungen, seine kontaktlose Karte in ein Terminal einzustecken, weil die Karte außerhalb des Terminals nicht funktioniert.
- Der Kartennutzer kann die Karte der kontaktlosen Datenübertragung bewußt und vorsätzlich entziehen, indem er entsprechende technische Einrichtungen betätigtinsbesondere eine umhüllende Abschirmung anbringt oder einen Schalter umlegt.

Wegen der letzteren Ausgestaltung unterbindet der Besitzer der Karte nicht nur den gegebenenfalls unerwünschten Fern-Zugriff, sondern auch den im bestimmungsgemäßen Gebrauch erwünschten Nah-Zugriff: Ein unangreifbares Kriterium für die Nah/Fern-Unterscheidung liegt nicht vor. Um eine solchermaßen gesperrte Karte dem legalen Nahbetrieb - insbesondere zum absichtlichen Auf- oder Abbuchen von Guthaben in einem Endgerät - doch wieder zugänglich zu machen, wird der Besitzer entweder die Abschirmung entfernen oder den Schalter in die Position für Ansprechbarkeit zurückbringen. Diese Rückgängigmachung der Sperre muß übrigens nicht ausschließlich bewußt manuell vom Besitzer verlangt werden; es ist auch vorstellbar, daß das Terminal die Sperre durch technische Mittel automatisch aufhebt. Sei die Sperre manuell oder automatisch aufgehoben - in jedem Fall ist dann der Schutz gegen den Fern-Zugriff insbesonderre einen solchen durch Angriff mit großer Intensität - dahin. Im automatischen Fall muß der Stand der Technik hiergegen das Terminal um die Karte herum abschirmen. Das führt zwar zu einer definierten Nah/Fern-Unterscheidung: Nah ist im Schirm - fern ist außerhalb - und kein fremder Eingriff mit noch so großer Intensität muß diese Hürde überwinden können. Aber: Über den unerwünschten physikalischen Aufwand hinaus liegt ein unüberwindlicher Nachteil dieser Lösung darin, daß die Qualität des Schutzes nicht von der Karte bestimmt wird, sondern von ihrer Umgebung: Die Karte opfert Souveranität über ihre Daten an die Umwelt. Im manuellen Fall gar wird der ungeschutzte Zeitraum erheblich ausgedehnt, wenn der Besitzer die Karte zwischen Aus- und Einschalten des Schutzes zusätzlich außerhalb des Endgerätes in der Hand hat - eine besonders gefährliche Situation. Eine mobile Abschirmung um die Karte herum, die beim Einführen der Karte in das Endgerät in der vorgenannten Abschirmung des letzteren aufgeht, darf getrost als unzumutbar verworfen werden. Ohnehin ist prinzipiell anzumerken, daß Abschirmungen wiederum nichts anderes sind als Mittel zur (dämpfenden) Beeinflussung der Intensität. Intelligentere Merkmale wohnen ihnen nicht inne.

Durch die DE 34 47 560 C2 ist eine Einrichtung zur berührungslosen Daten- und Energieübertragung bekannt geworden, bestehend aus einem unbeweglichen Teil, Mikrostation, mit einem Oszillator zur kontaktlosen Leistungsübertragung mit Hilfe von mindestens einem Spulenpaar an einen beweglichen Teil, Mikroeinheit, wobei eine Datenübertragung vom beweglichen zum unbeweglichen Teil durch Belastungsänderungen erfolgt. Die Schwingung des Oszillators wird in zwei getrennte Schwingungen aufgespalten, wobei der einen Schwingung in Abhängigkeit von den zu übertragenden Daten eine Phasenverschiebung gegenüber der anderen Schwingung aufgezwungen wird.. Diese phasenverschobene Schwingung wird über ein erstes Spulenpaar, die andere Schwingung über ein zweites Spulenpaar der Mikroeinheit zugeführt, wobei die Leistungsübertragung mit Hilfe der beiden Schwingungen über dieselben Spulenpaare erfolgt. In der Mikroeinheit werden die übertragenen Schwingungen einem Phasenvergleicher zugeführt, welcher aus der Phasenverschiebung die Daten wiedergewinnt. Die Datenübertragung von der Mikroeinheit zur Mikrostation erfolgt durch gleichzeitige Belastungsänderung an den beiden Spulen der Mikroeinheit, wodurch gewährleistet ist, dass an einer der beiden Spulen der Mikrostation auch bei vertauschter Zuordnung der Spulenpaare ein Nachweis der Belastungsänderung möglich ist.

Die gemachten Ausführungen ergeben die Konsequenz, daß bei kontaktlos arbeitenden Karten der beste Schutz vor unbemerktem Zugriff auf die Daten gegeben ist, wenn die Karte selbst - und nicht ihre Umgebung - in unmißverständlich nachvollziehbarer Weise entscheidet, ob sie sich im Nahbereich (eines Endgerätes) befindet und erst in diesem Falle besonders schutzwürdige Zugriffe auf ihre Daten zuläßt. Die Souveranität liegt in der Karte statt in der Umwelt.

Günstig ist eine technische Lösung, bei der auch eine kontaktlose Karte in gleicher Weise wie eine kontaktbehaftete Karte zwangsbestimmt erst dann gewisse Funktionen zuläßt, wenn sie in einem Terminal eingesteckt ist. Hierzu muß die kontaktlose Karte selbsttätig und zwangsgesteuert Funktionen in Abhängigkeit von eindeutig bestimmbaren und nicht unbeaufsichtigt veränderlichen physikalischen Merkmalen (insbesondere Strecken, Längen, Enffernungen) ein- bzw. ausschalten. Es darf bei einer solchen kontaktlosen Karte nicht möglich sein, insbesondere durch Vergrößerung der Sendeleistung des Schreib/Lese-Terminals die Zugangssperre aus einer unzulässig großen Enffernung zu überwinden.

Kontaktlose Karten, die über mindestens zwei räumlich voneinander getrennte Koppel-Elemente wie insbesondere Übertrager-Spulen, Kondensator-Platten oder Foto-Empfänger verfügen, können diese Anforderung erfüllen, indem sie Effekte ausnutzen, die sich aufgrund des räumlichen Abstandes dieser Eiemente voneinander ergeben (insbesondere bekannt als Stereo-Effekt). Kontaktlose Chipkarten, die den Stereoeffekt sinnentsprechend nutzen, sind in der Lage, selbsttätig und zwangsläufig zu entscheiden, ob sie sich innerhalb einer unveränderlichen, vorgegebenenReichweite eines Sende-Empfängers befinden. Bei ihnen ist die Reichweite des Zugriffs zwar durch unzureichende Intensitat noch reduzierbar, aber eindeutig nicht durch eine beliebig große Intensität des koppelnden Mediums über feste Grenzen erhöhbar. Zugriffe auf die Daten solcher Karten von außerhalb dieser Reichweite können damit ausgeschlossen werden, wenn dieser Ausschluß bestimmungsgemäß beabsichtipt ist. Sind solche Karten zusätzlich mit einer Einrichtung zur schaltbaren Berechtigung des Zugangs von ferne ausgestattet, so können diese Karten einerseits die Vorteile der kontaktlosen Kartentechnik nutzen, aber andererseits deren Nachteile umgehen.

Der Erfindung liegt die Aufgabe zugrunde, einen Daten- und/oder Funktionsträger sowie eine Vorrichtung zur berührungslosen Daten- und Energieübertragung zu schaffen, mit deren Hilfe die Elektronik einer kontaktlosen Karte selbsttätig erkennt, ob sie sich in einem Raumgebiet aufhält, das in seinen Abmessungen in eindeutiger Weise von der Geometrie der Karte und nicht von der Intensität des koppelnden Feldes begrenzt wird.

Die Lösung der Aufgabe besteht erfindungsgemäß bei einem Daten- und Funktionsträger der eingangs genannten Gattung darin, dass beim Auftreten eines voreingestellten Wertes der Phasenverschiebung zwischen den besagten Signalen ein erster Ausgangssignalpegel erzeugt wird und, wenn die Phasenverschiebung von dem voreingestellten Wert abweicht, ein zweiter, vom ersten Ausgangssignalpegel verschiedener Ausgangssignalpegel erzeugt wird, wobei mindestens eine weitere elektronische Schaltung beim Auftreten eines der beiden Signalpegel aktiviert und beim Auftreten des anderen Signalpegels deaktiviert wird. Die Vorrichtung zur berührungslosen Daten- und Energieübertragung umfasst einen Terminal, der wenigstens zwei Wechselfeldquellen zur Erzeugung und Abstrahlung von Wechselfeldern aufweist sowie den Daten- und/oder Funktionsträger, wobei die Empfangselemente des Daten- und/oder Funktionsträgers zum Empfang der vom Terminal abgestrahlten Wechselfelder geeignet sind.

Die patentgemäße Lösung schafft in vorteilhafter Weise ein Kriterium, mit dem in den internationalen Normgremien zwischen "close coupling cards" and "remote coupling cards" entschieden werden kann.

"Close-coupled card function" ist gemäß diesem Patentbegehren eine Kartenfunktion, die nur in einem solchen - die Karte umgebenden - begrenzten Raumgebiet nutzbar ist, dessen Ausdehnung von den Abmessungen der Karte und/oder der Ausdehnung bzw. geometrischen Anordnung ihrer funktionsbestimmenden Bestandteile beschränkt ist und nicht durch Steigerung der Feldstärke auf ein vergrößertes Raumgebiet ausgedehnt werden kann.

Kurzbeschreibung der Zeichnung, in der zeigen:
- Figur 1: die Darstellung der beiden Räume, in denen eine kontaktlose Chipkarte selbsttätig ihgre Entfernung zu Koppelelementen eines Senders trennscharf beurteilen kann
- Figur 2: die Herleitzung der schraffierten Gebiete in Figur 1
- Figur 3: ergänzende Details zu Figur 2
- Figur 4: den Anschluss der Kartenspulen an die Elektroniken E1 und E2 mit Blockschaltbild der Kombinationsglieder mit Phasengrenzwertgeber
- Figur 5: die Darstellung der folgen der Beaufschlagung der beiden Sender mit Quadraturphase
- Figuren 6 und 7: die Darstellung der zeitlichen Verläufe der Terminalspulen-Wechselflüsse und
- Figur 8: die Ausdehnung des Stereotrenngebietes.

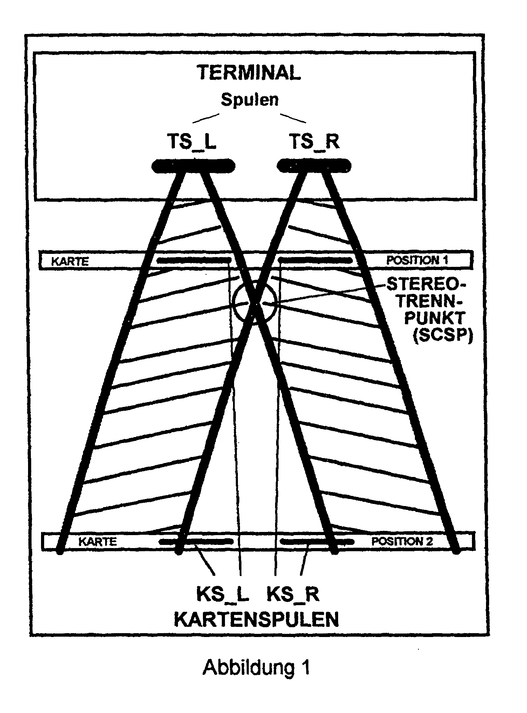

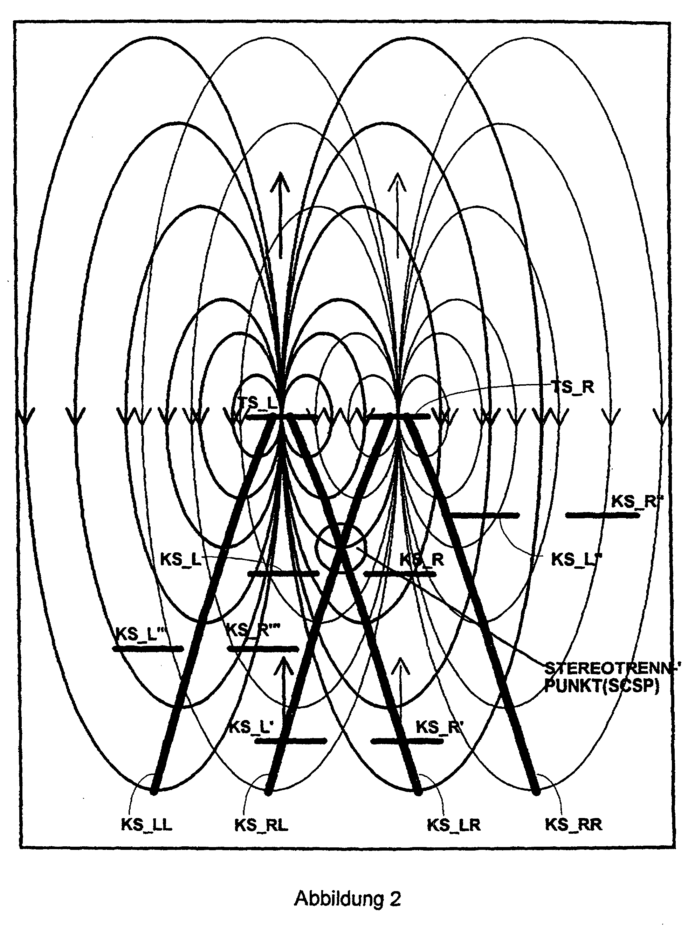

Bezüglich Figur 1 gibt es zwei Räume, in denen eine kontaktlose Karte - mit zwei KoppelElementen KS_L und KS_R (fiir insbesondere "Kartenspule links" und "Kartenspule rechts") nach ISO 10536 - selbsttätig ihre Entfernung (quasi per Stereoeffekt) zu den entsprechenden Koppelelementen des Senders TS_L und TS_R (fiir insbesondere "Terminalspule links" und "Terminalspule rechts") besonders trennscharf beurteilen kann. Wegen ihrer besonderen Rolle sind die Schnitte dieser beiden Räume in der Figur schraffiert. Es sind die stereotechnischen Zonen des gegenphasigen Übersprechens von Sendern mit ausgeprägter Richtcharakteristik auf Empfänger mit ausgeprägter Richtcharakteristik (Dipole koppeln auf Dipole). Auf welche Weise diese besonderen Räume zustandekommen, ist anschließend in Figur 2 ausführlicher behandelt. Weil in der Karte der Abstand der Empfangs-Elemente KS_L und KS_R voneinander, hier Stereo-Basis genannt, nicht veränderbar ist, bestimmt die Stereobasis die größte Entfernung, in der die Karte den Stereoeffekt nachweisen und nutzen kann.

In der oberen Kartenposition POSITION 1 befinden sich beide Empfangselemente KS_L und KS_R in jeweils einem schraffierten Gebiet: der Stereoeffekt ist wirksam. Das gegenphasige Übersprechen stützt die Kanaltrennung, weil jeweils das korrespondierende Element über die kurze Distanz ohne Phasendrehung koppelt (TS_L koppelt unmittelbar auf KS_L einerseits und TS_R koppelt unmittelbar auf KS_R andererseits), während gleichzeitig das jeweils nicht korrespondierende Element über Kreuz mit verkehrter Phase koppelt (TS_L koppelt mit verkehrtem Vorzeichen auf KS_R einerseits und TS_R koppelt mit ebenfalls verkehrtem Vorzeichen auf KS_L andererseits). Der Störkanal (jeweils TS L in Bezug auf KS_R und entsprechend TS_R auf KS_L) wirkt auf den Nutzkanal (jeweils TS_L in Bezug auf KS_L und entsprechend TS_R auf KS_R) subtraktiv.Wegen der aus ISO 10536 folgenden Quadraturphase ist jedes der beiden Empfangselemente KS L und KS R in dieser Position am besten in der Lage, das ihm von TS_L und TS_R jeweils zugedachte Signal so trennscharf zu empfangen, daß die nachfolgende Auswertung daraus die gewünschte Orts-Information erzeugen kann.

In der unteren Position POSITION 2 ist die Karte weiter von den Sendeelementen TS_L und TS_R enfternt; die beiden Empfangselemente KS_L und KS_R liegen nicht mehr zur gleichen Zeit in jeweils einem schraffierten Gebiet: der Stereoeffekt hat stark nachgelassen. Die Figur zeigt in diesem Fall - POSITION 2 - die Zentren der beiden Empfangselemente KS_L und KS_R schon in der stereotechnischen Zone des gleichphasigen Übersprechens: Die Sendeelemente TS_L und TS_R wirken schwerpunktmäßig nur noch additiv auf die Empfangselemente KS_L und KS_R - die Kanaltrennung verschwindet und aus der Stereo-Ubertragung ist eine Mono-Übertragung geworden. Wegen der obengenannten Quadraturphase führen beide Empfangselemente KS_L und KS_R im Gegensatz zu POSITION 1 hier schon das untereinander fast gleiche Signal, aus dem sich wegen der fehlenden Unterschiedlichkeit desto weniger Ortsinformation gewinnen läßt, je weiter die POSITION 2 von der POSITION 1 enfternt ist.

Figur 2 dient der Herleitung der schraffierten Gebiete in Figur 1. Die Terminalspulen TS_L und TS_R sind wieder die Sende-Elemente. Insbesondere als Dipole ausgebildet, sind sie nicht unendlich kurz wie ein Hertzscher Dipol und liefern deshalb keine sphärischen, sondern etwa rotations-elliptische Flußflächen, deren Schnitte in der Figur qualitativ gezeichnet sind. Die beiden Feldvektoren der beiden Sende-Elemente TS_L und TS_R mögen parallel zueinander senkrecht stehen - und zeigen in der Figur sichtbar nach oben, so daß der Fluß in der Figur sichtbar aus dem jeweiligen Dipol TS_L bzw. TS_R oben herauskommt und unten wieder in den jeweiligen Dipol eindringt. Der Fluß von TS_L ist mittelfett gezeichnet, der von TS_R mager. Fur die weiteren Betrachtungen sei diese Anordnung insbesondere geometrisch stationär, nur der erzeugte Fluß ist insbesondere ein Wechselfluß. Die Kartenspulen KS_L und KS_R sind insbesondere ebenfalls magnetische Dipole - nun aber nicht als Quellen wie die Terminalspulen TS_L und TS_R, sondern Senken. Ihre beiden Feldvektoren stehen ebenfalls parallel zueinander und darüberhinaus insbesondere ebenfalls senkrecht in der Figur und damit parallel zu den zuvor beschriebenen Feldvektoren der SendeElemente TS_L und TS_R. Alle Spulen TS_ und KS_ sind in der Figur symbolisch als Seitenansichten von Flachspulen gezeichnet. Im Gegensatz zu den Sende-Elementen TS_L und TS_R sind die Empfangs-Elemente KS_L und KS_R aber in der Figur nicht als stationär vorausgesetzt, sondern lassen sich ohne Drehung ihrer Feldvektoren parallel verschieben, um die verschiedenen interessanten System-Zustände studieren zu können. Entsprechend sind weitere Lagen von Kartenspulen insbesondere durch KS_L' und KS_R', KS_L" und KS_R" sowie schließlich noch KS_L''' und KS_R"' gekennzeichnet.

Besonders interessant sind nun an den Flußlinien jene Singularitäten, die in einer oder beiden Kartenspulen keinen Beitrag zur Induktion liefern. Weil die Feldvektoren der Kartenspulen KS_L und KS_R zuvor als insbesondere senkrecht vorausgesetzt wurden, treten diese Singularitäten regelmaßig dort im Feld auf, wo die Flußlinien horizontal verlaufen. In der Figur ist die untere Hälfte dieser Singularitäten deutlich gemacht. Gezeichnet sind fett die geometrischen Orte der horizontalen Tangenten an alle Flußlinien der Zeichenebene. Es sind einmal die Linien KS_LL und KS_LR, die von dem Sende-Element TS_L verursacht sind, und zum anderen die beiden Linien KS_RL und KS_RR, die entsprechend von dem Sende-Element TS_R stammen. Diese beiden Linienpaare sind in Figur 1 übernommen worden.

Diese geometrischen Orte sind unverzichtbar für die Abgrenzung der Ortsbereiche mit unterschiedlicher Wirkung des gesendeten Feldes auf die in den Empfängern induzierten Signale. Es sei betont, daß bei den anschließenden Schlußfolgerungen aus Symmetriegründen die obere Hälfte der Figur als bekannt vorausgesetzt wind. Es ist einzusehen, daß in der Figur sowohl links von der Linie KS_LL als auch rechts von KS_RR jede vorstellbare Flußlinie von oben nach unten durch eine beliebige Kartenspule KS_ geht (in der Figur Fall KS_L" / KS_R"). Es sei definiert, die Kartenspulen KS_ seien elektrisch so gepolt, daß die induzierte Spannung in.diesem Spezialfall negativ ist. Etwas größere Aufmerksamkeit erfordert die Analyse der Situation nahe dem Zentrum der Figur, weil sich hier gegensinnige Flüsse überlagern konnen. Das betroffene Medium ist linear und das Ergebnis durch lineare Superposition bestimmt. Befindet sich eine beliebige Kartenspule KS_ unterhalb der Linien KS_LL und KS_LR, dann ist die in ihr wegen TS_L induzierte Spannung infolge der zuvor definierten elektrischen Polung positiv. Befindet sich entsprechend eine beliebige Kartenspule KS_ unterhalb der Linien KS_RL und KS_RR, dann ist die in ihr wegen TS_R induzierte Spannung ebenfalls positiv. Entsprechend entgegengesetzt ist die von TS_L verursachte Spannung in einer KS_ oberhalb der Linien KS_LL und KS_LR negativ und entsprechend die von TS_R verursachte Spannung in einer KS_ oberhalb der Linien KS_RL und KS_RR ebenfalls negativ.

Das Ergebnis der Superposition der einzelnen Kopplungen von den beiden Quellen TS_ zu einer Senke KS_ sei - je nach der einzelnen Flußrichtung und folgerichtig der induzierten Polarität - gleichphasiges oder gegenphasiges Übersprechen genannt: Haben die beiden Flüsse von TS_L und TS_R jeder für sich in der jeweiligen KS_ die gleiche Polarität der induzierten Spannung zur Folge, so heiße das Übersprechen gleichphasig. Folgerichtig muß das Übersprechen gegenphasig heißen, wenn die genannten beiden Flüsse jeder für sich entgegengesetzte Polaritäten induzieren. Nach dieser Vereinbarung ist die Figur folgendermaßen zu interpretieren: Die in Figur 1 schraffierten Zonen erfahren gegenphasiges Übersprechen, alle anderen Zonen in beiden Figuren aber gleichphasiges. In Figur 2 ist - wie bemerkt - die obere Hälfte als zur unteren Halfte symmetrisch nicht nochmals behandelt.

Kein Übersprechen tritt auf den in der Figur fett gezeichneten Linien auf: dort ist stets eine der beiden Aussendungen von TS_L oder TS_R auspelöscht - es herrscht perfekte Kanaltrennung. Für die folgenden Betrachtungen sei insbesondere angenommen, die Stereo-Basis sei einheitlich: der Abstand der beiden KS_ voneinander sei konstant ebenso groß wie der Abstand der beiden TS_ voneinander. Verschiebt man diese Anordnung nun auf den fett gezeichneten Linien entlang dort, wo diese Linien jeweils zueinander parallel verlaufen, so wirkt die vorgenannte perfekte Kanaltrennung bis hinein in die induzierten Spannungen: am Ausgang jeder der beiden Kartenspulen erscheint nur ein Signal von einem der beiden Sender TS_L oder TS_R - ohne Übersprechen. Je weiter weg von dem Sendespulenpaar TS_ das Empfangssuplenpaar KS_ entlang dieser parallel verlaufenden fett gezeichneten Linien geschoben wird, desto kleiner wird der Raumwinkel, den diese parallel verlaufenden Linien einnehmen. Desto kleiner wird also der Raumwinkel, in dem brauchbare Kanaltrennung herrscht, um daraus eine Berechtigung für den Zugriff auf den Karteninhalt abzuleiten. Für einen unberechtigten Angriff genügt es also nicht, von ferne genügend Intensität aufzubringen und damit in diesem Raumwinkel die Kanaltrennung auszunutzen. Der Angreifer muß das Sendespulenpaar TS_ mit der richtigen Stereo-Basis nachbilden UND einen der beiden in Figur 1 schraffierten Sektoren so ausrichten, daß die Karte mit der ausreichenden Kanaltrennung getroffen wird. Als weiteres Hindernis für den Angriff kommt hinzu, daß der angreifende Sender die Ausrichtung der Karte im Raum nicht kennt: die in Figur 2 fur den Nutzbetrieb gezeichnete ideale Anordnung paralleler Feldvektoren wird im Störbetrieb nicht zufällig vorliegen, so daß von den relevanten geometrischen Strecken nur deren Projektionen auf das Kartenspulen-Paar KS_wirken. Schon in Bezug auf die Stereo-Basis stimmt dann die Geometrie des Störsenders einerseits und der angegriffenen Karte andererseits nicht überein.

Darüberhinaus störfest wird der Betrieb auch auf diesen singulären Parallelen, wenn die beiden von TS_L und TS_R gesendeten Signale insbesondere gleiche Frequenz haben, phasenstarr zueinander synchronisiert sind, Quadraturphase tragen und schließlich die binäre Modulation eine symmetrische Quadraturmodulation (QM) ist. Wenn dann in der Karte von den induzierten Spannungen aus KS_L und KS_R insbesondere sowohl das Summensignal als auch das Differenzsignal gebildet wird, läßt sich zeigen, daß die gute Kanaltrennung auf den singulären Parallelen nicht ausreicht, sofern die Karte aus dem Differenzsignal den Takt eines Synchrondetektors macht und das Summensignal der . binären Modulation zuordnet. Bei dieser Ausgestaltung geschieht folgendes: In Figur 2 senkrecht unter den Sendern TS L und TS R liefert die Karte in allen Positionen auf und zwischen TS_L und TS_R oben uber KS_L und KS_R auf halber Höhe bis KS_L' und KS_R' unten unverändert phasenstabilen Takt aus dem Differenzsignal und stabile Quadraturmodulation aus dem Summensignal. Im Gegensatz dazu sind auf den obengenannten kritischen Parallelen Summen- und Differenzsignal in der Ferne miteinander vertauscht: der zurückgewonnene Takt hängt von der binären Modulation ab und braucht nur wegen der damit einhergehenden Phasensprünge elektrisch verworfen zu werden. Oberhalb des singulären Punktes (das ist in Figur 2 der Schnittpunkt der beiden Linien KS_LR und KS_RL - im Raum schneiden sich zwei gleiche Kegel in einer Hyperbel, deren Scheitel dieser Schnittpunkt ist.) ist der Takt aus dem Differenzsignal stabil wie im vorgenannten Nutzbetrieb, aber die binäre Modulation ist komplementär zur Nutzmodulation, was für die Karte eine unmißverständliche Aufforderung zum Aussondern eines Störsignals darstellt. Auf der Höhe des soeben definierten singulären Punktes findet die Umkehrung der Verhältnisse statt: dort trägt sowohl das Summenals auch das Differenzsignal Quadraturmodulation und kann wegen dieses erkennbaren Defekts ebenfalls von der Karte verworfen werden.

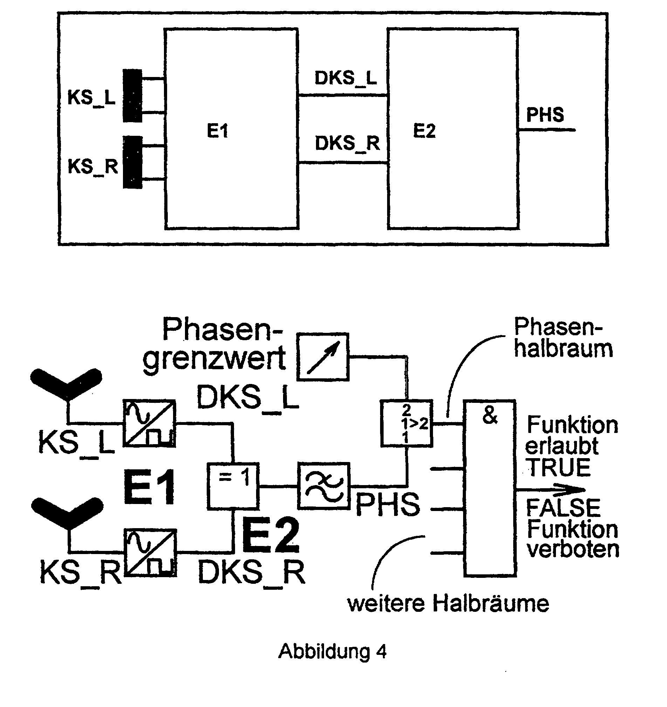

Hinzu kommt, daß entlang der hier diskutierten singulären Parallelen das Signal PHS von Figur 4 nicht über 50% high ansteigen kann. Es ist also sinnvoll, den Phasen-Grenzwert gemäß dieser Figur 4 größer als 50% high zu wählen, um die Vortäuschung von Nutzbetrieb auf den singulären Parallelen zu bekämpfen.

Wie oben beschrieben, sind die Verhältnisse bei der insbesondere gewählten Betriebsart auf gerader Linie zwischen und in den Positionen von TS_L / TS_R bis KS_L' / KS_R' eindeutig, signifikant und stabil - im Gegensatz zu den sonstigen Positionen, wo sie das nicht zur gleichen Zeit sind. Dieser ausstehende Beweis ist als Negativbeweis für die Zonen unterhalb aller fetten Linien in Figur 2 problemlos: dort gibt es - je weiter, desto signifikanter - kein Differenzsignal, weil beide Empfänger KS_L und KS_R vom gleichen Fluß getroffen werden, also keinen Takt. Das gleiche gilt weit genug rechts und links aller parallelen Linien.

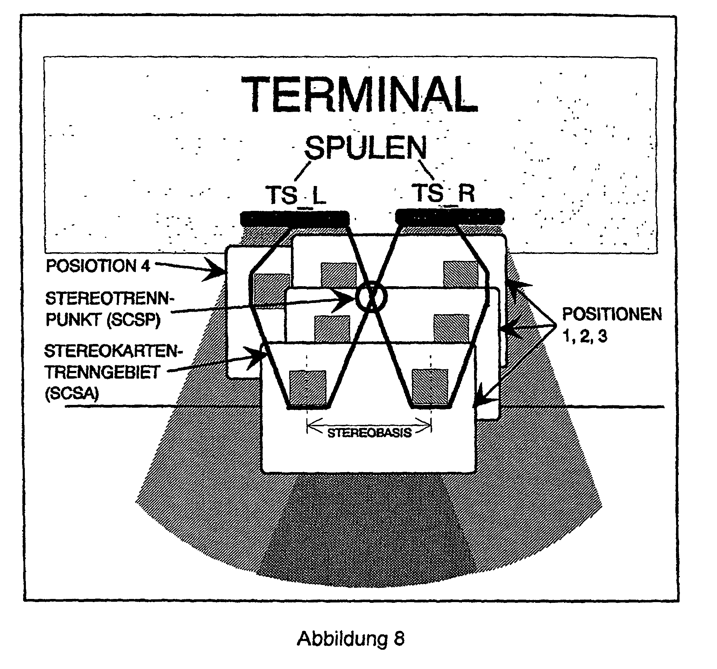

Die Umgebung des singulären Punktes ist die eigentliche Nutz-Zone, weil - unter Zuhilfenahme von Figur 8 - nur dort das gegenphasige Ubersprechen zur Phasenspreizung führt, die in Figur 4 zu einem Phasensignal PHS>50% high führt. Durch eine sinnvolle Festlegung des Phasen-Grenzwertes hoch über 50% high kann einerseits das Nutzgebiet in Richtung größerer Sicherheit verkleinert, andererseits der Störabstand gegen unerwünschte Angriffe aus Störgebieten verbessert werden.

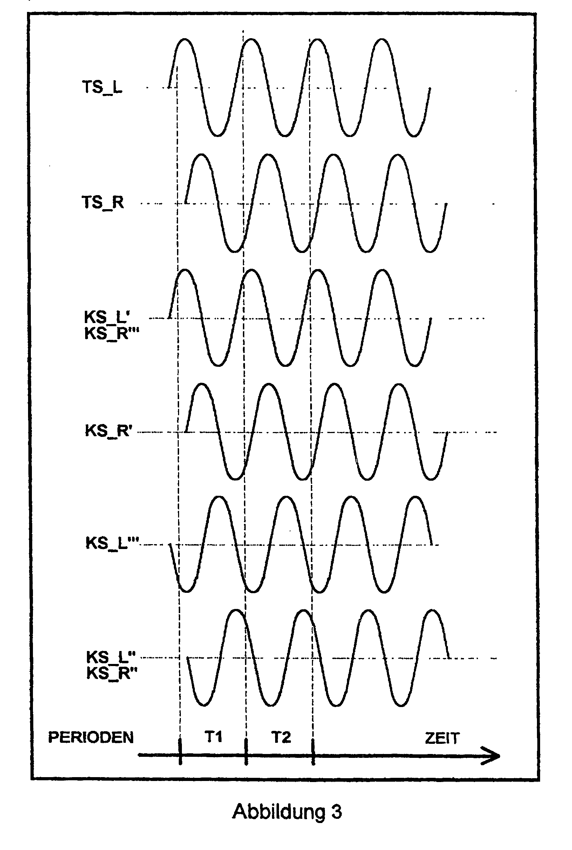

Bezüglich der Figur 3 wurde bereits in der Legende zu Figur 2 insbesondere angenommen, daß die beiden Sender TS_L und TS_R mit Quadraturphase versehen senden. Diese Vorstellung wird durch Figur 3 zunächst grob qualitativ sehr speziell nur im Zeitbereich vertieft. Weitere erganzende Details ergeben sich aus der weiter hinten folgenden Zeiger-Darstellung. In Bezug auf die unten bemaßten Perioden ist TS_L um 45° früh und TS_R um 45° spät. Wie aus Figur 2 im Ortsbereich bekannt ist, kommt in der Position KS_L' kein Beitrag von TS_R, also ist die Phase von KS_L' mit der von TS_L identisch.

Unter qualitativer Berücksichtigung der Überlagerung bei Respektierung der Abstandsverhältnisse kommt KS_L früher als KS_L', weil sich dort negativer Fluß von TS_R (mithin 90° früher als TS_L) addiert. (gegenphasiges Übersprechen) Entsprechend kommt KS_R später als KS_R', weil dort negativer FluS von TS_L (mithin 90° später als TS_R) überspricht Diese beiden letzteren Zeitverläufe sind aber in Figur 3 nicht eingetragen.

Aus Figur 2 ist ersichtlich, daß der Zeitverlauf in den Positionen KS_R''' mit KS_L' fast übereinstimmt: durch das gegenphasige Übersprechen aus TS_R kommt KS_R"' etwas früher als KS_L', was aber in Figur 3 in der zeichnerischen Auflösung untergeht. In der Position KS_L''' koppeln beide Sender TS_L und TS_R gegenphasig ein, Figur 3 aber vernachlässigt aus zeichnerischen Grunden den Einfluß des entfernteren Senders TS_R. Tatsächiich kommt KS_L"' etwas später als gezeichnet, aber im Prinzip sieht man in Figur 3 an dem entgegenge setzten Vorzeichen der beiden Zeitverläufe von KS_R"' und KS_L"', daß das Summensignal verschwindet und nach der zuvor in der Legende zu Figur 2 gewählten Ausgestaltung keine gute Modulation gewonnen werden kann.

In vergleichbarer Weise lassen sich in Figur 3 die Zeitverläufe von KS_L" und KS_R" aus Figur 2 ableiten: auf beide Empfänger koppeln die Sender gegenphasig ähnlich KS_L''', aber hier dominiert zeichnerisch die umpekehrte Phase von TS_R. Beide Spulen zusammen liefern kein Differenzsignal, also keinen Takt.

Die umfangreichen Bemerkungen zu den Figuren 1, 2 und 3 haben aus verschiedenen Blickwinkeln Antworten darauf gegeben, wie die insbesondere gewählte Ausgestaltung der Karte mit fester Stereo-Basis nach ISO 10536, und Nutzung von Quadraturphase und Quadraturmodulation potentielle Angriffe auf die Souveranität des Kartenbesitzers uber seine Daten abwehren kann. Sollte ein Angreifer die Stereo-Basis des Senders manipulieren, indem er die Spulen im Terminal anders anordnet, so muß Figur 2 nicht ganz umgezeichnet werden: nach Klärung der dann wirksamen Projektion der Stereo-Basis auf die Zeichnung braucht formal nur die Stereo-Basis der Karte KS_ reziprok angepaßt zu werden. Die Empfindlichkeit der Karte gegen den Ortsbereich ist dann zwar nicht mehr maximal, aber immer noch merklich. Dreht man die Karte innerhalb der Zeichenebene von Figur 2, so dreht sich die in Figur 1 schraffierte Struktur entgegengesetzt. Das verbessert die Selektion im so bevorzugten Ortsbereich. Im Zweifel funktioniert die Karte am trennschärfsten in der Umgebung des durch Einkreisung markierten singulären Punktes, hier Stereotrennpunkt (für internationale Zwecke englisch hier ergänzend englisch benannt: stereo card separation point (SCSP)). Im SCSP verschwinden alle in der Figur 2 senkrechten Flußkomponenten; geht man mit einer Empfangs-Spule um den SCSP herum, so dreht sich der Wechselfluß-Zeiger in gleichem Maße, (je nach Vorzeichen der Quadraturphase gleich- oder gegen-gerichtet). Im Vektorfeld heißt diese Singularität Rotor (Wirbel).

Fehlen irgendwelche notwendigen Randbedingungen, so erkennt die Karte entweder keinen Takt oder keine Modulation an und läßt in diesem Betriebszustand keine schutzwürdigen Funktionen zu, sondern nur ungeschützte - soweit die intensitätsbedingte Reichweite (die Stärke des insbesondere hier beschriebenen Magnetfeldes nimmt mit der dritten Potenz des Abstandes ab) und das für ungeschützte Funktionen weniger intelligente Demodulationsverfahren das zuläßt .

Ein Chipkartensystem, das die in den Figuren 1, 2 und 3 mit TS_L, TS_R, KS_L, KS_R usw. symbolisch angedeuteten Übertragungs-Mittel enthält, ist Gegenstand des Patents DE 34 47 560, in welchem nicht angegeben ist, wie gewährleistet wird, daß die Karte nur dann bestimmte Funktionen ausführt, wenn sie sich in einem Raumgebiet befindet, in dem der Stereotrennpunkt (SCSP) liegt, womit eine Entscheidung über Nah-Betrieb (close coupling) gegeben wäre. Erst wenn die karteninterne Elektronik diese Leistung erbringt, ist gewährIeistet, daß Daten nur dann ausgelesen oder verändert werden, wenn die Karte sich in einem solchen Abstand zu den Terminalspulen befindet, wie er durch die Geometrie der Spulenanordnung in der Karte in Beziehung zur Geometrie der Spulenanordnung im Terminal (Abstände, Stereo-Basen, Stereotrennpunkt) vorbestimmt ist.

Bezüglich der Figur 4 sind die Kartenspulen KS_L und KS_R, welche die quadraturphasigen Signale der Terminalspulen TS_L und TS_R empfangen, mit ihren Ausgängen an eine Karten-Elektronik E1 gelegt, in der die binären modulierten Signale DKS_L, DES_R entstehen. Aus diesen Signalen erzeugt die Elektronik E2 das Signal PHS, das durch seinen logisch wahren (TRUE) bzw. falschen (FALSE) binären Zustand eine in den Signalen der DKS_L und DKS_R transportierte Phasenmodulation abbildet, die für den Betrieb der erfindungserheblichen Bestandteile der Kartenelektronik nutzbar ist.

Ein mehr ins Detail gehendes Blockschaltbild ist im unteren Teil von Figur 4 unter Verwendung üblicher Kombinationsglieder in Anlehnung an DIN 40700 dargestellt. Insbesondere ist zusätzlich die Eingabe eines Phasengrenzwertgebers dargestellt. Zusätzlich sind weitere Anschlüsse für zur Verfügung stehende Halbräume freigehalten.

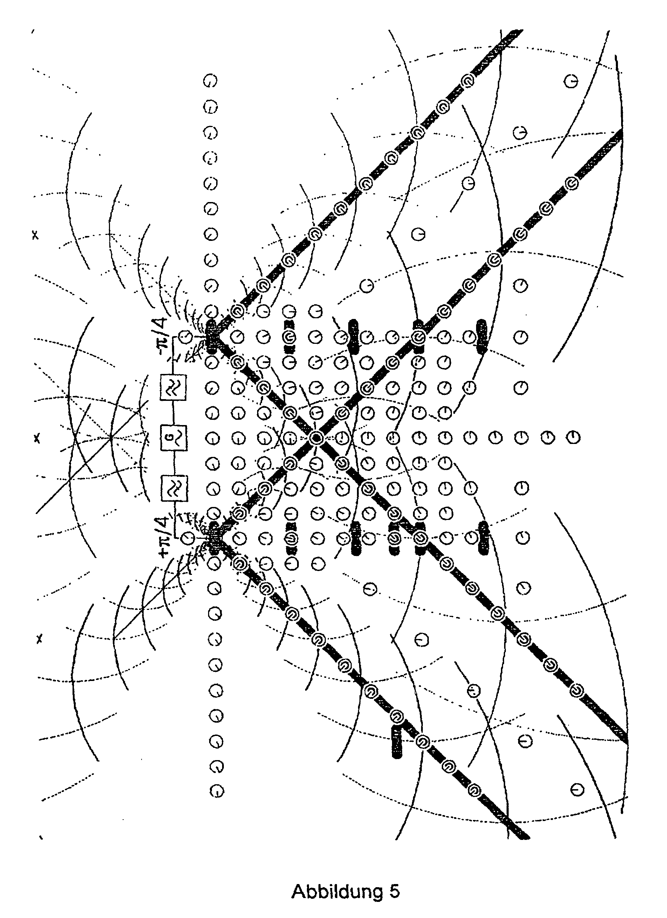

Figur 5 hat die Aufgabe, die Folgen der Beaufschlagung der beiden Sender TS_L und TS_R mit Quadraturphase verständlich zu machen. Es ist eine teil-quantitative Weiterentwicklung der Figur 2 und verwendet die dort eingerührten Symbole. Die Flußlinien sind wieder halbfett und mager ausgezogen, hinzugekommen sind gestrichelte Feldstärkelinien.

Zunächst ist mit Blockschaltungs-Symbolen gezeigt, wie auf bekannte Weise die Phasen entstehen: Ein Generator erzeugt ein Sinus-Signal, das in zwei Phasenschiebern um entgegengesetzt jeweils 45° geschoben wird. Unmittelbar am Ausgang jedes Phasenschiebers ist die jeweilige Phase jeweils links an TS_L mit "-π/4" und rechts an TS_R mit "+π/4" unmilßverständlich gekennzeichnet.

Unmittelbar auf der zugehörigen Zuleitung zum jeweiligen Sende-Element ist jeweils als kleines Symbol die Darstellung des Signals im Phasenbereich, als - in der Wechselstromtheorie üblicher - Zeiger angebracht. Die Figur zeigt hiervon ausgehend den Ortsgang der Zeiger infolge der Addition in Abhängigkeit von jeweils Phase und Länge der beiden Feld-Komponenten, aber unter zeichnerischer Vernachlässigung der resultierenden Länge. Gezeichnet ist nur die Phase des resultierenden Zeigers mit dem Ende auf einem Einheitskreis, weil für das System anspruchsgemäß - wegen Verzichts auf die Intensität - die Lange des Zeigers nicht relevant ist.

Bei der Betrachtung der Figur dürfen die Zeiger nicht mit Feldvektoren verwechselt werden. Schon in den Voraussetzungen zu Figur 2 wurde festgelegt, daß die Feldvektoren von Sender und Empfänger parallel zueinander und im Bild senkrecht stehen. Nur die vertikalen Komponenten der ortsabhängigen Feldvektoren induzieren in den Empfangern Signale. Die Wechselfluß-Zeiger dieser vertikalen Komponenten sind hier in Figur 5 ortsabhängig eingetragen.

Die Figur zeigt das Feld im unmodulierten Zustand. Sei der logische Zustand dann insbesondere logisch FALSE. Zufolge ISO 10536 erfolgt die Datensendung bit-seriell quadratur-phasenmoduliert. Hierfür genügt es, durch einen diskreten Phasenhub das Feld bedarfsweise in den Zustand logisch TRUE zu versetzen, um in ansonsten bekannter Weise zum Transport logischer Bits beizutragen. Dieses tut der Sender, indem er - auf welche bekannte Weise auch immer - die positive Phase "+π/4" durch Addition von π/2 auf +3π/4 vergroBert und die negative Phase "-π/4" durch Subtraktion von π/2 auf -3π/4 verkleinert. In der Figur bedeutet die Abstraktion dieses Vorgangs, daß das Feldbild innerhalb der Zeichen-Ebene um 180° gedreht wird und ansonsten unverändert weiterwirkt. Das Signal PHS ändert sich durch diese Art der Modulation stationär in keiner Weise und deshalb ist das beanspruchte Ortungsverfahren von der Modulation stationär unabhängig . Transiente Störungen insbesondere durch Umschwingen von Energiespeichern beim logischen Zustandswechsel lassen sich insbesondere durch bekannte Austast-Verfahren oder Synchrondetektoren bekämpfen, zumal die Möglichkeit der Rückgewinnung eines - im Nutzbereich um den singulären Punkt herum - ortsunabhängig und modulations-unabhängig phasenreinen Taktes aus dem Differenz-Signal zur Verfügung steht.

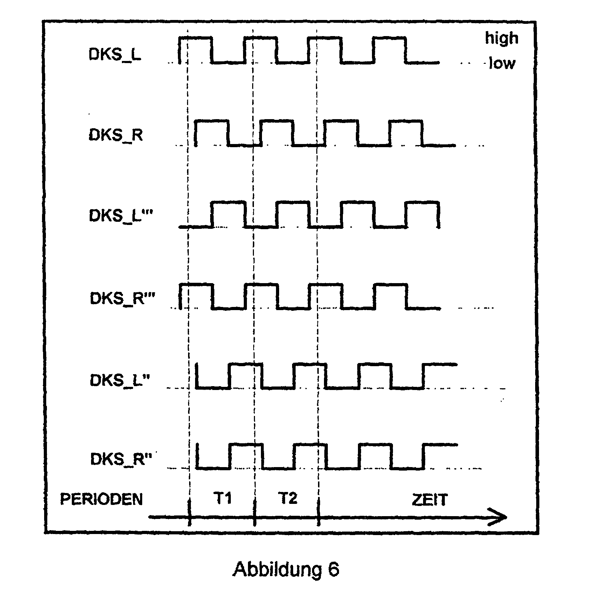

Im oberen Teil von Figur 6 sind als DKS_L, DKS_R die Verläufe der Terminalspulen-Wechselflüsse (bekannt als TS_L und TS_R aus Figur 3) im Zeitbereich dargestellt, wie sie - bei perfekter Kanaltrennung - nach Induktion in den Kartenspulen KS_L' und KS_R' aus Figur 2, dem Kiemmen der unteren Halbwelle und der Begrenzung der oberen Halbwelle ausssehen würden. Diese binären Signale sind somit von der Intensität befreit und tragen nur noch die Phase. Die Quadraturphase ist schon im - hier ausschließlich gezeigten - unmodulierten Zustand ersichtlich. Nach dieser Bereinigung können die verschiedenen - noch unmodulierten - Phasen je nach Lage der Kartenspulen entsprechend Figur 2 und der zunächst groben Interpretation in der Legende zu Figur 3 betrachtet werden.

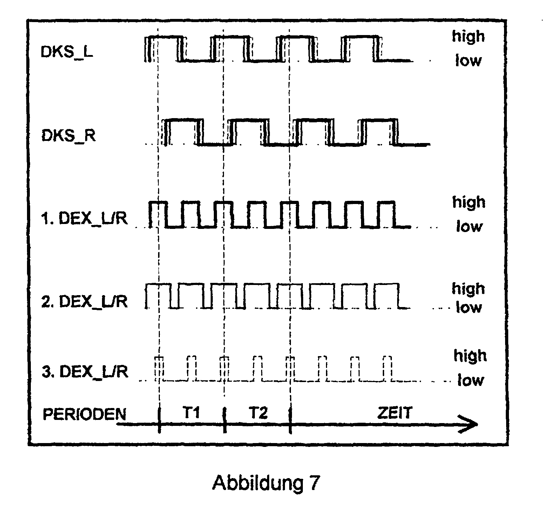

In einer Auspestaltung gemäß Figur 7 werden innerhalb E2 von Figur 4 die binären Signale DKS_L und DKS_R beispielhaft in einer als Phasendetektor bekannten Einrichtung mit einem XOR-Gatter verknüpft. Es ergeben sich Signalverläufe, die patentgemäß ausgewertet werden. Die Art der Auswertung ist in den Anspruchsbeschreibungen ausgeführt.

In Figur 8 wird die Ausdehnung des Stereotrenngebietes (SCSA), in dem sich der Stereotrennpunkt (SCSP) befindet, dargestellt. Durch die Abhängigkeit von der Stereobasis und der patentgemäßen Erzeugung eines spezifischen Signals (PHS) ist das Stereotrenngebiet in seiner Ausdehnung bestimmbar und legt die Grenzen fest, in denen eine Normkarte gemäß ISO 10536 autonom, ohne zusätzliche Information uber ihre Lage, einen Nah-Bereich in Relation zu einem Sender ("ctose coupling") von einem Fern-Bereich("remote coupling") trennen kann.

Anspruch 1 geht auf kontaktlose Chip-Informationsträger ein, die mindestens zwei räumlich voneinander getrennte Empfangselemente (KS_L, KS_R) wie Übertrager-Spulen, Kondensator-Platten, Foto-Empfänger, Mikrofone oder andere Elemente enthalten, die zum Empfang von zwei verschieden beaufschlagten Signalen - insbesondere mit Phasendifferenz - geeignet sind.

In einer Ausgestaltung werden in einer ersten Elektronik E1 die Signale aus KS_L, KS_R für eine zweite Elektronik E2 so aufbereitet, daß eine Phasendifferenz zwischen diesen beiden Signalen elektronisch auswertbar wird. In Figur 3 sind insbesondere die Signale KS_L', KS_R' mit 90° Pasendifferenz dargestellt. Figur 4 stellt ein Blockschaltbild der Elektroniken E1, E2 mit ihren Ein- und Ausgängen dar. Die aus KS_L, KS_R gewonnenen und von E1 aufbereiteten Signale sind in Figur 6 dargestellt. DKS_L, DKS_R bilden die Phasendifferenz der Signale aus KS_L, KS_R ab. Durch den Einsatz des Komparator mit Schwelle Null sind die Intensitäten verschwunden und können den Betrieb nicht beeinflussen, solange die Intensität beider Signale KS_L und KS_R absolut ausreicht, um den Nulldurchgangs-Komparator störungsfrei zu betreiben (insbesondere eine bekannte Rauschsperre-(Squelch-) Schaltung kann dieses Problem in bekannter Weise abfangen. Andere Phasendifferenzen ergeben sich in Figur 4 und 6 aufgrund unterschiedlicher räumlicher Verhältnisse zwischen KS_L, KS_R einerseits und TS_L, TS_R andererseits.

E2 soll auf eine diskrete Phasendifferenz zwischen DKS_L und DKS_R mit einem ein-eindeutigen diskreten Signal PHS reagieren. Insbesondere fiir eine Phasendifferenz von 90° zwischen DKS_L und DKS_R - in einem informationslosen Bezugs-Zustand - ist in Figur 7 als Ergebnis das Signal 1.DEX_LR angegeben, welches das diskrete Tastverhältnis 1:1 aufweist. Bei von 90° abweichender Phasendifferenz werden mit 2.DEX_L/R und 3.DEX_LR andere Tastverhältnisse gewonnen. Somit ist das Tastverhältnis ein Indiz fur die Phasendifferenz und und kann als Ausführungsbeispiel für die Signalauswertung im Sinne des Anspruchs genommen werden. Aus dem Tastverhältnis kann der Pegel des Ausganges PHS gewonnen werden. Bei Abweichung vom Tastverhältnis 1:1 in .DEX_LR kann der Pegel PHS den neuen Zustand PHS' annehmen. Insoweit ist das Ausführungsbeispiel zu dem bekannten Phasendetektor aus XOR-Glied und nachfolgendem Tiefpaß äquivalent.

Wie aus den Erläuterungen zur Figur 2 hervorgeht, bleibt eine zwischen TS_L und TS_R eingeprägte Phasendifferenz nur unter begrenzten geometrischen Umständen im Verhältnis zu TS_L, TS_R erhalten und kann demgemäß von diesen abgebildet werden. In diesem geometrischen Zustand müssen sich KS_L, KS_R befinden, da sonst die empfangene Phasendifferenz nicht den in TS_L, TS_R eingeprägten Wert haben kann. Wird die Intensität in den Elementen TS_L, TS_R in beliebiger Weise geändert, so hat dies keine Auswirkungen auf die Grenzen, der in Figur 1 schraffierten Zonen, wie zu Figur 2 erläutert wurde. Wird die Intensitat in beiden Elementen TS_L, TS_R nach Größe und/oder Vorzeichen zugleich geändert, so hat dies keine Auswirkungen auf den phasenmäßigen Inhalt (= Ortsgang des Phasengradienten) dieser Zonen. Nur verschiedenartige Veränderungen der Intensitäten können den Inhalt der Zonen verbiegen: auch dann werden nur die Phasenfelder innerhalb ibrer unveränderlichen Grenzen quantitativ verzerrt, bleiben aber qualitativ einsatzfähig.

Da patentgemäß die Stärke der Sendeleistung an den Elementen TS_L, TS_R das Signal nicht beeinflußt, die Stereobasis als konstant vorausgesetzt wird, indiziert das Signal PHS ein meßtechnisch und patentgemäß klar erfassbares Raumgebiet, welches mit dem Namen Stereotrenngebiet (SCSA, stereo card separation area) belegt wird. Das derart erfaßte SCSA ermöglicht eine Trennung zwischen Nah-Bereich (close coupling) und Fern-Bereich (remote coupling). Ein Element, welches die patentgemäße Ausführung hat, ist geeignet selbsttätig das Stereotrenngebiet zu erfassen. Würde beispielsweise eine Videokamera die Bewegungen einer Karte in der Nähe des Stereotrennpunktes aufzeichnen und ware in derselben Karte eine Aufzeichnung und Speicherablage der zeitlichen Änderung des Signals PHS vorhanden, könnte das per Kamera aufgezeichnete Verlassen des Stereotrenngebietes aus den PHS-Signaländerungen in der Karte nachvollzogen werden.

Fur die Blöcke E1 und E2 in Figur 4 kann eine Ausgestaltung mit einem integrierten Signalprozessor gewählt werden. In diesem Falle kann die Hardware-Beschreibungs-Sprache einem Compiler übergeben werden, womit sich die erzeugende Technik des Signals PHS nach allen bekannten Implementierungsschritten insbesondere als Firmware im ROM des Prozessors befindet.

Der Ortsbereich, in dem eine gesendete Phasendifferenz erkennbar ist, wird neben den geometrischen Verhältnissen auch von der Größe der Phasendifferenz der gesendeten Signale an TS_L, TS_R zueinander bestimmt.

Bei Gegen-Phase löschen sich die Felder in der Ferne gegenseitig aus: nutzbare Komponenten des Flusses gibt es nur in der Nähe der Sender TS_L und TS R. Bei Phasen-Gleichheit addieren sich die Felder in der Ferne und führen dadurch zu einer beliebig großen Reichweite, eine Phasen-Information zur Nah/Fern-Unterscheidung ist aber nicht verfügbar. Diese beiden Phasenlagen sind untaugliche Sonderfälle. Der aus der Überlagerung der beiden von TS_L und TS_R erzeugten Felder resultierende Wechsel-Fluß behält einen stets skalaren Zeiger: er ändert je nach Empfangsort nur Länge und/oder Vorzeichen. Er ist binär gedreht. Der Phasengradient ist im Ortsbereich meist Null und nur auf speziellen geometrischen Orten etwa unendlich . Dort ist der unendliche Gradient für die Nah/Fern-Unterscheidung nur dann - scheinbar - von Nutzen, wenn die Stereo-Basis des Empfängers nur etwa halb so groß ist wie die des Senders. Allerdings vertauscht sich "Nah" mit "Fern", wenn die Karte gewendet wird - d. h. KS_L mit KS_R den Platz tauscht. Die überhaupt relevanten geometrischen Orte liegen in beiden Fällen innerhalb des Dreiecks, das von dem singulären Punkt und den beiden Sendern in Figur 1 und 2 eingeschlossen wird. Im gleichphasigen Fall ist das zu nahe, im gegenphasigen Fall viel zu nahe für eine Ausgestaltung, wie sie Gegenstand der Ansprüche ist.

Im Fall der Quadraturphase auf den Sendern TS_L, TS_R wird der gesamte Ortsgang des Phasengradienten stetig und differenzierbar, weil sich die orthogonalen Zeiger der beiden Felder je nach lokaler Intensität (Zeigerlange) zu einem analog gedrehten Zeiger addieren. Der lokale Phasengradient kann von einem Empfänger KS_L, KS_R abgegriffen und in der beschriebenen Weise zu einem Analogsignal PHS verarbeitet werden. Das ist eine optimale Ausgestaltung für den Gegenstand dieser Ansprüche. Angriffe mit hiervon abweichender Phasen-Beaufschlagung zum Zweck der Täuschung der Karte über ihre Position können den Systemzustand nur in Richtung der zuvor verworfenen Gleichphasigkeit oder Gegenphasigkeit verfälschen und sich damit den bereits diskutierten Ortungsproblemen aussetzen.

Die in Figur 4 grafisch dargestellte Einrichtung zeigt eine mögliche Ausgestaltung zur optimalen Nutzung dieser soeben bevorzugten Quadraturphase. Ein Komparator vergleicht das zur lokalen Phase proportionale Analog-Signal PHS mit einem in der Figur sogenannten (ebenfalls analogen) Phasen-Grenzwert, der so eingestellt ist, daß er sich im Ortsbereich auf die Grenze zwischen zwei interessierenden Halbräumen abbildet.

Befindet sich die Karte in dem einen Halbraum, so seien schutzwürdige Operationen erlaubt, in dem anderen Halbraum verboten. In welchem der beiden Halbraume sich die Karte befindet, sagt folgerichtig das binäre Signal hinter dem Komparator in Figur 4 aus. Sinnvollerweise ist der Halbraum fur die Erlaubnis schutzwürdiger Operationen durch den logischen Zustand "wahr" (TRUE) signalisiert statt umgekehrt. Dann nämlich kann - wie in Figur 4 insbesondere gezeigt - dieses Signal in einem UND-Glied mit weiteren Einschränkungen (insbesondere weitere "Halbräume", auch abstrakte solche wie - insbesondere im extrem einfachen Fall - ein elektromechanischer Schalter) qualifiziert werden.

Zu der soeben erläuterten logischen Qualifizierung des grundlegenden Halbraum-Signals in dem UND-Glied nach Figur 4 können weitere Halbraum-Signale hinzugezogen werden, um auf möglichst sichere Weise solche Halbraum-Positionen an der Zulassung schutzwürdiger Operationen zu hindern, die eine zweifelhafte Position der Karte signalisieren. Nur dann, wenn alle diese am UND-Glied aufgeschalteten Halbraum-Signale gleichzeitig logisch wahr sind, läßt der Ausgang des UNDGlieds die schutzwürdige Operation zu. Das ist die konforme Figur des Schnittes geometrischer Orte vom Ortsbereich auf die Konjunktion der binären Logik.

Um nur einige wenige Möglichkeiten zu nennen, geometrische Orte zur Verbesserung der Positionsbestimmung hinzuzufügen, seien insbesondere aufgezählt:
- unmodulierte Aussendung mit Quadraturphase
   -- Summensignal
   -- Differenzsignal
- quadratur-modulierte Aussendung mit Quadraturphase
   -- Summensignal
   -- Differenzsignal

Das bis hier beschriebene Verfahren nutzt die Auswertung einer Phasendifferenz. Die an den Elementen KS_L, KS_R empfangene Intensität kann zusätzlich ausgewertet werden - zumindest redundant zur Sicherung der Bestimmung der Empfänger-Position.

Diese Intensität ist geeignet, die Richtung des Flusses aus den Elementen TS_L, TS_R einzugrenzen, selektiert jedoch keinen Ortsbereich, weil die empfangene Intensität außer von der räumlichen Orientierung der Karten-Empfangselemente KS_L, KS_R in Bezug auf die Terminal-Sendeelemente TS_L, TS_R auch von der Intensitat des gesendeten Signals abhangt. Auch hier kann die absolute Intensitat jedes Kanals fur sich prinzipiell eliminiert werden, indem insbesondere jeweils der Momentanwert durch den Effektivwert dividiert wird. Ein nutzbarer geometrischer Ort zur Beseitung von Mehrdeutigkeit im Sinne des Anspruchs ist insbesondere (in der Zeichenebene von 2) die Hyperbel - gewonnen durch Kreuzdivision der Effektivwerte von KS_L, KS_R. Eine Amplitudenmodulation ist allerdings nicht nutzbar, weil diese nach ISO 10536 bereits fur den Rück-Kanal verbraucht ist.

Der durch größere Distanz der Karte von der Sende-Einrichtung verursachte Feldstarke-Abfall mit der drirtten Potenz des Abstandes ist prinzipiell eine naturliche Grenze fur den Betrieb. Zuerst fallt der nach ISO 10536 lastmodulierte Rück-Kanal aus, weil der von der Karte aufgebrachte Hub nicht mehr im Terminal ankommt. Aber der phasenmodulierte Hinweg vom Terminal zu der Karte mag noch bei größeren Distanzen funktionieren, so daß ein Störer der Karte aus der Ferne Informationen blind einprägen kann, ohne sich um die Antwort aus der Karte zu kümmmern. Insbesondere diese Moglichkeit wird durch die Ansprüche unterbunden.

Herzschrittmacher können Primar-Batterien oder kontaktlos aufgeladene Sekundär-Batterien enthalten, um ihre Funktion aufrechtzuerhalten. Solche Geräte sollen von außen kontaktlos steuerbar sein, ohne daß sonstige im Raum befindliche Felder einen Einfluß auf die Funktion haben dürfen. Wird das erfindungsgemäße Prinzip genutzt, können Funktionen von Herzschrittmachern in einem Nahbereich kontaktlos gesteuert werden, während eine Beeinflussung aus größerer Entfernung ausgeschlossen ist.

Die vom Karteninhaber gewollte Fernubertragung von Daten, beispielsweise in öffentlichen Verkehrsmitteln oder in der Zutrittskontrolle, ist vorteilhaft, da das Einstecken der Karte enffallt. Um eine unbemerkte Abfrage auszuschliellen, kann die Fernübertragung per Schalterbetätigung auf der Karte de-aktiviert werden.

Ist eine Karte grundsatzlich fur den Fern-Betrieb (remote coupling ISO 10536) eingerichtet, so kann die augenblickliche Wirksamkeit des FernBetriebs durch den Vergleich des Signals PHS mit dem Grenzwert entschieden werden, indem ein Komparator den Vergleich in bekannter Weise erledigt und die Wirksamkeit des Fern-Betriebs in der gewunschten Weise schaltet.

Dieser Schalter kann durch das Signal PHS uberbruckt werden, weil die Karte sich dann im Nahbereich eines Terminals befindet. Eine Fernuberbruckung des Schalters kann auf diese Art erfindungsgemäß ausgeschlossen werden.

Wird eine Karte mit anspruchsgemallen Eiementen ausgefuhrt, so kann diese Karte bei der Erkennung eines voreingestellten Phasenunterschiedes ein Signal PHS erzeugen, das zu Sperrung oder Offnung von Kartenfunktionen benutzt werden kann und somit die Nutzung von bestimmten Kartenfunktionen nur ermoglicht, wenn sich die Karte in vorbestimmter Nahe zu einem Terminal befindet. Der betreffende Ortsbereich wird durch die geometrische Anordnung der Empfangselemente - nicht durch die Intensitat des umgebenden Feldes - bestimmt.

Der in der Karte einzustellende Grenzwert kann auf Gegebenheiten des Terminals eingestellt werden.

Es ist denkbar, daß trotz der bekannten Nachteile eine Karte zur Fernübertragung einen Ein/Ausschalter zwecks manueller Bedienung auf der Karte enthalt. Dieser Schalter kann in seiner Funktion durch eine Kombination mit dem Signal PHS verbunden werden. Beispielsweise kann der Schalter bei Aufenthalt der Karte im Stereotrenngebiet in seiner Funktion geändert werden.

## Patentansprüche

1. Mikroelektronischer Daten- und/oder Funktionsträger zur berührungslosen Daten- und Energieübertragung umfassend mindestens zwei räumlich voneinander getrennte Empfangselemente (KS_L, KS_R) für Wechselfelder; mindestens eine Elektronik (E1,E2,E3) zur Aufbereitung der Wechselfeldkomponenten an den Empfangselementen (KS_L, KS_R) als Signale (DKS_L, DKS_R), derart, dass eine Phasenverschiebung zwischen den Wechselfeldkomponenten an den Empfangselementen (KS_L, KS_R) eindeutig in eine Phasenverschiebung zwischen den Signalen (DKS_L,DKS_R) abgebildet wird, **dadurch gekennzeichnet,**
**dass** beim Auftreten eines voreingestellten Wertes der Phasenverschiebung zwischen den besagten Signalen (DKS_L,DKS_R) ein erster Ausgangssignalpegel (PHS) erzeugt wird und, wenn die Phasenverschiebung von dem voreingestellten Wert abweicht, ein zweiter, vom ersten Ausgangssignalpegel (PHS) verschiedener Ausgangssignalpegel (PHS') erzeugt wird, wobei mindestens eine weitere elektronische Schaltung beim Auftreten eines der beiden Signalpegel (PHS, PHS') aktiviert und beim Auftreten des anderen Signalpegels (PHS, PHS') deaktiviert wird.

2. Vorrichtung zur berührungslosen Daten- und Energieübertragung, umfassend
einen Terminal, der wenigstens zwei Wechselfeldquellen zur Erzeugung und Abstrahlung von Wechselfeldern aufweist,
einen Daten- und/oder Funktionsträger nach Anspruch 1, wobei die Empfangselemente (KS_L, KS_R) des Daten- und/oder Funktionsträgers zum Empfang der vom Terminal abgestrahlten Wechselfelder geeignet sind.

3. Vorrichtung nach Anspruch 2, **dadurch gekennzeichnet,**
**dass** die aus den Wechselfeldquellen des Terminals herrührenden Wechselfelder an verschiedenen Orten des Daten- und/oder Funktionsträger zur Verfügung gestellt werden, welche untereinander verschiedene Phasen tragen, und sich diese verschiedenen Wechselfelder in dem umgebenden Raum überlagern und dadurch ortsabhängig unterschiedliche resultierende Phasengradienten verursachen, so dass in der Folge der Ausgangspegel (PHS) aus sämtlichen Wechselfeldern resultiert.

4. Vorrichtung nach Anspruch 2, **dadurch gekennzeichnet,**
**dass** zwischen den Wechselfeldquellen des Terminals solche Phasendifferenzen gewählt werden, dass der am Ort des Daten- und/oder Funktionsträgers verfügbare Phasengradient die Feststellung eines möglichst eindeutigen geometrischen Orts in Bezug auf die örtlichen Positionen der Wechselfeldquellen des Terminals erlaubt.

5. Vorrichtung nach einem der vorherigen Ansprüche 2-4, **dadurch gekennzeichnet,**
**dass** eine verbleibende Mehrdeutigkeit des signalisierten geometrischen Ortes dadurch reduziert wird, dass mindestens ein weiterer - anderer - geometrischer Ort signalisiert wird, der mit dem zunächst signalisierten geometrischen Ort geschnitten und damit zu einem neuen geometrischen Ort von kleinerer Ausdehnung wird.

6. Vorrichtung nach Anspruch 5, **dadurch gekennzeichnet,**
**dass** der neu hinzugekommene geometrische Ort durch unterschiedliche Modulation der Phase der Wechselfeldquellen des Terminals gewonnen wird.

7. Vorrichtung nach einem der vorherigen Ansprüche 2-6, **dadurch gekennzeichnet,**
**dass** ein weiterer geometrischer Ort in dem Daten- und/oder Funktionsträger durch Auswertung von Intensitätsunterschieden der durch verschiedene Modulation der Wechselfeldquellen des Terminals gewonnenen, unterscheidbaren Wechselfeldkomponenten hinzukommt.

8. Vorrichtung nach Anspruch 2, **dadurch gekennzeichnet,**
**dass** der zu wechselnde Systemzustand die Zugangsberechtigung des Quellen-Tupels zu, insbesondere schutzwürdigen, Daten oder Operationen innerhalb des Daten- und/oder Funktionsträgers ist.

9. Vorrichtung nach Anspruch 2, **dadurch gekennzeichnet,**
**dass** der Grenzwert im Betrieb durch Eingriff mit stärkeren Zugriffsrechten in beliebiger Richtung verstellt werden kann, wozu der Daten- und/oder Funktionsträger einen Schalter aufweist, der per Schalterbetätigung die Fernübertragung des Daten- und/oder Funktionsträgers de- oder aktiviert.

10. Vorrichtung nach Anspruch 2, **dadurch gekennzeichnet,**
**dass** bei einem grundsätzlich fiir den Fernbetrieb eingerichteten Daten- und/oder Funktionsträger die augenblickliche Wirksamkeit des Fernbetriebes durch einen Vergleich des Signals PHS mit dem Grenzwert entschieden wird und dazu ein Komparator dient, welcher die Wirksamkeit des Fernbetriebs in der gewünschten Weise schaltet.

11. Vorrichtung nach Anspruch 2, **dadurch gekennzeichnet,**
**dass** der Grenzwert im Betrieb durch Eingriff mit schwächeren Zugriffsrechten nur in einer solchen Richtung verstellt werden kann, dass der Zugriff auf bestimmte, schutzwürdige, Daten und/oder Operationen in der Folge stärkere Zugriffsrechte erfordert, wozu der Daten- und/oder Funktionsträger einen Schalter aufweist, der nur dann durch das Signal PHS überbrückt werden kann, wenn sich der Daten- und/oder Funktionsträger im Nahbereich des Terminals befindet.

12. Vorrichtung nach Anspruch 2, **dadurch gekennzeichnet,**
**dass** die Wirkrichtung des Kriteriums (PHS) ein solches Vorzeichen hat, dass eine größere geometrische Entfernung des Daten- und/oder Funktionsträgers von dem Schwerpunkt des Quellentupels der Wechselfeldquellen des Terminals eine Schwächung der Zugriffsrechte bewirkt.

13. Vorrichtung nach Anspruch 2, **dadurch gekennzeichnet,**
**dass** der Grenzwert auf eine solche Größe fest eingestellt ist, daß außerhalb der Einbehaltungsreichweite des Terminals kein Nahbetrieb möglich ist.

14. Vorrichtung nach einem der Ansprüche 9 oder 11, **dadurch gekennzeichnet,**
**dass** der manuell betätigbare Schalter auf dem Daten- und/oder Funktionsträgers zur Aktivierung oder Deaktivierung von Funktionselementen zur Schaffung von neuen funktionalen Gegebenheiten mit dem Signal PHS kombiniert wird.

15. Daten- und/oder Funktionsträger nach Anspruch 1, **dadurch gekennzeichnet,**
**dass** der erste Ausgangssignalpegel (PHS) in einer Elektronik (E1) und der zweite Ausgangssignalpegel (PHS') in einer weiteren Elektronik (E2) erzeugt wird, für welche gegebenenfalls eine Ausgestaltung mit einem integrieten Signalprozessor gewählt ist.

## Claims

1. Microelectronic data and/or function carriers for contact-free data and energy transmission, comprising at least two spatially separated receiving elements (KS_L, KS_R) for alternating fields, at least one electronic unit (E1, E2, E3) for processing the alternating field components at the receiving elements (KS_L, KS_R) as signals (DKS_L, DKS_R) in such a way that a phase shift between the alternating field components at the receiving elements (KS_L, KS_R) is unambiguously imaged in a phase shift between the signals (DKS_L, DKS_R), **characterized in that**
when a preset value of the phase shift occurs between said signals (DKS_L, DKS_R), a first output signal level (PHS) is generated and, when the phase shift deviates from the preset value, a second output signal level (PHS'), which differs from the first output signal level (PHS), is generated, whereby at least one additional electronic circuit is activated when one of the two signal levels (PHS, PHS') occurs and is deactivated when the other signal level (PHS, PHS') occurs.

2. A device for contact-free data and energy transmission, comprising a terminal that has at least two alternating field sources for generating and emitting alternating fields,
a data and/or function carrier according to Claim 1, whereby the receiving elements (KS_L, KS_R) of the data and/or function carrier are suitable for receiving the alternating fields emitted by the terminal.

3. The device according to Claim 2, **characterized in that**
the alternating fields emanating from the alternating field sources of the terminal are provided at various locations of the data and/or function carrier which have phases that differ from each other, and these different alternating fields are superimposed in the surrounding space, as a result of which they cause different resulting phase gradients in a location-dependent manner, so that consequently, the output level (PHS) results from all of the alternating fields.

4. The device according to Claim 2, **characterized in that**
between the alternating field sources of the terminal, such phase differences are selected that the phase gradient available at the location of the data and/or function carrier allows the determination of the most unambiguous, geometric location possible with respect to the spatial positions of the alternating field sources of the terminal.

5. The device according to one of the preceding Claims 2 through 4, **characterized in that**
a remaining ambiguity of the signaled geometric location is reduced **in that** at least one more - different - geometric location is signaled that intersects with the first signaled geometric location and thus becomes a new geometric location having a smaller extension.

6. The device according to Claim 5, **characterized in that**
the newly added geometric location is ascertained by differing modulation of the phase of the alternating field sources of the terminal.

7. The device according to one of the preceding Claims 2 through 6, **characterized in that** another geometric location in the data and/or function carrier is added through the evaluation of intensity differences of the distinguishable alternating field components that are obtained through differing modulation of the alternating field sources of the terminal.

8. The device according to Claim 2, **characterized in that**
the system state to be changed is the access authorization of the source tupel, especially sensitive data or operations within the data and/or function carrier.

9. The device according to Claim 2, **characterized in that**
the limit value during operation can be adjusted by intervention with stronger access rights in any desired direction, for which purpose the data and/or function carrier has a switch that uses a switch actuation to activate or deactivate the remote transmission of the data and/or function carrier.

10. The device according to Claim 2, **characterized in that**,
in the case of a data and/or function carrier that is fundamentally set up for remote operation, the momentary effectiveness of the remote operation is decided by a comparison of the signal PHS with the limit value and a comparator serves for this purpose which switches the effectiveness of the remote operation in the desired manner.

11. The device according to Claim 2, **characterized in that**
the limit value during operation can be adjusted by intervention with weaker access rights only in such a direction that the access to certain, sensitive data and/or operations requires stronger access rights in the sequence, for which purpose the data and/or function carrier has a switch that can only be bridged by the signal PHS when the data and/or function carrier is within the range of the terminal.

12. The device according to Claim 2, **characterized in that**
the direction of action of the criterion (PHS) has such a mathematical sign that a greater geometric distance of the data and/or function carrier from the focal point of the source tupel of the alternating field sources of the terminal brings about a weakening of the access rights.

13. The device according to Claim 2, **characterized in that**
the limit value is permanently set at such a quantity that, outside of the acquisition range of the terminal, no proximity operation is possible.

14. The device according to one of Claims 9 or 11, **characterized in that**
the manually operable switch on the data and/or function carrier is combined with the signal PHS for activating or deactivating function elements in order to create new functional situations.

15. The data and/or function carrier according to Claim 1, **characterized in that** the first output signal level (PHS) is generated in an electronic unit (E1) and the second output signal level (PHS') is generated in another electronic unit (E2) for which optionally an embodiment with an integrated signal processor is selected.

## Revendications

1. Support microélectronique de données et/ou de fonctions destiné à la transmission sans contact de données et d'énergie, comportant au moins deux éléments récepteurs (KS_L, KS_R) espacés l'un de l'autre pour recevoir des champs alternatifs, au moins une électronique (E1,E2,E3) pour le traitement des composantes des champs alternatifs aux éléments récepteurs (KS_L, KS_R) en tant que signaux (DKS_L, DKS_R), de façon à ce qu'un déphasage entre les composantes des champs alternatifs aux éléments récepteurs (KS_L, KS_R) se traduise de façon univoque par un déphasage entre les signaux (DKS_L, DKS_R),
**caractérisé en ce que**, lorsqu'une valeur préréglée de déphasage entre lesdits signaux (DKS_L, DKS_R) se présente, un premier niveau de signal de sortie (PHS) est généré et, lorsque le déphasage présente un écart par rapport à la valeur préréglée, un deuxième niveau de signal de sortie (PHS') est généré qui diffère du premier niveau de signal de sortie (PHS), au moins un circuit électronique supplémentaire étant activé lorsque l'un des deux niveaux de signal (PHS, PHS') intervient, et étant désactivé lorsque l'autre niveau de signal (PHS, PHS') intervient.

2. Dispositif pour la transmission sans contact de données et d'énergie, comprenant un terminal présentant au moins deux sources de champs alternatifs servant à la génération et à l'émission de champs alternatifs,
un support de données et/ou de fonctions selon la revendication 1, les éléments récepteurs (KS_L, KS_R) du support de données et/ou de fonctions étant aptes à recevoir les champs alternatifs émis à partir du terminal.

3. Dispositif selon la revendication 2,
**caractérisé en ce que** les champs alternatifs provenant des sources de champs alternatifs du terminal sont mis à disposition dans des endroits différents du support de données et/ou de fonctions et portent des phases diverses et que lesdits champs alternatifs divers se superposent dans l'espace ambiant causant de ce fait, en fonction du lieu respectif, des gradients de phase résultants différents, de sorte que, par la suite, le niveau de sortie (PHS) résulte de tous les champs alternatifs.

4. Dispositif selon la revendication 2,
**caractérisé en ce que** les différences de phase entre les sources de champs alternatifs sont choisies de sorte que le gradient de phase disponible à l'endroit du support de données et/ou de fonctions permet la constatation d'un lieu géométrique si possible univoque par rapport aux positions locales des sources de champs alternatifs du terminal.

5. Dispositif selon l'une quelconque des revendications 2 à 4,
**caractérisé en ce que** l'équivoque qui demeure concernant le lieu géométrique signalé est réduite par le fait qu'au moins un autre lieu géométrique est signalé qui est coupé avec le premier lieu géométrique signalé ce qui donne un nouveau lieu géométrique de plus petite étendue.

6. Dispositif selon la revendication 5,
**caractérisé en ce que** ledit lieu géométrique qui vient s'ajouter est obtenu par une modulation différente de la phase des sources de champs alternatifs du terminal.

7. Dispositif selon l'une quelconque des revendications 2 à 6,
**caractérisé en ce que** s'ajoute un autre lieu géométrique sur le support de données et/ou de fonctions par l'évaluation des différences d'intensité des composantes de champs alternatifs discernables obtenues par une modulation différente des sources de champs alternatifs du terminal.

8. Dispositif selon la revendication 2,
**caractérisé en ce que** l'état du système qui doit changer est le droit d'accès de l'uplet de source notamment aux données ou aux opérations à protéger sur le support de données et/ou de fonctions.

9. Dispositif selon la revendication 2,
**caractérisé en ce que** la valeur limite en service peut être réglée dans n'importe quel sens par une intervention avec des droits d'accès plus forts, le support de données et/ou de fonctions présentant à cet effet un commutateur qui active ou désactive la transmission à distance du support de données et/ou de fonctions lorsqu'il est actionné.

10. Dispositif selon la revendication 2,
**caractérisé en ce que**, dans le cas d'un support de données et/ou de fonctions équipé en principe pour le fonctionnement à distance, l'efficacité instantanée du fonctionnement à distance est décidée par la comparaison du signal PHS avec la valeur limite, ce qui est effectué par un comparateur qui commande l'efficacité du fonctionnement à distance de la façon souhaitée.

11. Dispositif selon la revendication 2,
**caractérisé en ce que** la valeur limite en service peut être réglée par intervention avec des droits d'accès plus faibles uniquement dans le sens que l'accès à des données et/ou opérations déterminées à protéger exige par la suite des droits d'accès plus forts, le support de données et/ou de fonctions présentant à cet effet un commutateur ne pouvant être ponté par le signal PHS que lorsque le support de données et/ou de fonctions se trouve dans la zone à proximité immédiate du terminal.

12. Dispositif selon la revendication 2,
**caractérisé en ce que** la direction d'action du critère (PHS) présente un signe tel que plus la distance géométrique entre le support de données et/ou de fonctions et le centre de l'uplet de source des sources de champs alternatifs du terminal augmente, plus les droits d'accès s'affaiblissent.

13. Dispositif selon la revendication 2,
**caractérisé en ce que** la valeur limite est fermement réglée à une grandeur telle qu'aucun fonctionnement à courte distance ne soit possible en dehors du rayon d'action de retenue du terminal.

14. Dispositif selon l'une quelconque des revendication 9 ou 11,
**caractérisé en ce que** le commutateur actionnable manuellement sur le support de données et/ou de fonctions est combiné avec le signal PHS pour activer ou désactiver des éléments fonctionnels dans le but de créer de nouvelles conditions fonctionnelles.

15. Support de données et/ou de fonctions selon la revendication 1,
**caractérisé en ce que** le premier niveau de signal de sortie (PHS) est engendré dans une électronique (E1) et que le deuxième niveau de signal de sortie est engendré dans une autre électronique (E2) pour laquelle on choisit le cas échéant un mode de réalisation avec un processeur de signaux intégré.
